(19) **Europäisches Patentamt / European Patent Office / Office européen des brevets**

(11) **EP 2 790 310 B1**

(12) # EUROPEAN PATENT SPECIFICATION

(45) Date of publication and mention of the grant of the patent:
**06.01.2021 Bulletin 2021/01**

(21) Application number: **12855124.9**

(22) Date of filing: **31.10.2012**

(51) Int Cl.:
**H02K 33/16** *(2006.01)*   **A61C 17/34** *(2006.01)*

(86) International application number:
**PCT/JP2012/007002**

(87) International publication number:
**WO 2013/084403 (13.06.2013 Gazette 2013/24)**

(54) **LINEAR ACTUATOR STRUCTURAL BODY AND ORAL CAVITY HYGIENE DEVICE PROVIDED WITH SAME**

STRUKTURKÖRPER FÜR EINEN LINEARANTRIEB UND MUNDHÖHLENHYGIENEVORRICHTUNG DAMIT

CORPS STRUCTUREL À ACTIONNEUR LINÉAIRE ET DISPOSITIF D'HYGIÈNE BUCCALE ÉQUIPÉ DE CELUI-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.12.2011 JP 2011265623**

(43) Date of publication of application:
**15.10.2014 Bulletin 2014/42**

(73) Proprietor: **Panasonic Corporation**
**Osaka 571-8501 (JP)**

(72) Inventors:
• **HASHIMOTO, Toshiharu**
  **Osaka 540-6207 (JP)**
• **KOBAYASHI, Noboru**
  **Osaka 540-6207 (JP)**

• **MORIGUCHI, Masashi**
  **Osaka 540-6207 (JP)**

(74) Representative: **Grünecker Patent- und Rechtsanwälte**
**PartG mbB**
**Leopoldstraße 4**
**80802 München (DE)**

(56) References cited:
WO-A1-2009/119450    WO-A2-2010/143166
WO-A2-2010/143166    JP-A- S6 122 812
JP-A- H07 116 027    JP-A- H11 512 938
JP-A- 2002 176 758    JP-A- 2008 259 330
JP-A- 2010 104 126    JP-A- 2010 104 126
US-A1- 2011 214 239

**Description**

The present invention relates to a linear actuator structure including an oscillation type linear actuator, which includes a movable unit that reciprocates linearly, and a housing.

A linear actuator includes a stator and a movable element, which are formed by an electromagnet, a permanent magnet, or the like. The stator and the movable element are spaced apart by a predetermined interval. Patent document 1 describes an example of an actuator including a stator, which is located at the inner side of a tubular movable element, and a buffer member, which is arranged in a portion of the periphery of the stator. The interval of the stator and the buffer member is set to be smaller than the interval of the stator and the movable element. Thus, when external force is applied to the linear actuator, the stator contacts the buffer member before the stator and the movable element come into contact. This limits decreases in the reliability or the like of the linear actuator that would be caused by the contact of the stator and the movable element.

Patent Document 1: Japanese Laid-Open Patent Publication No. 2010-104126

Generally, it is desirable that the interval of the stator and the movable element be reduced to improve the performance of the linear actuator. Thus, it is desirable that the interval of the stator and the buffer member be smaller than the interval of the stator and the movable element in the linear actuator described in patent document 1. Therefore, in the linear actuator described in patent document 1, high accuracy is needed for molding and assembling component. This results in difficult manufacturing and component management and lowers yield.

WO 2010/143166 A2 relates to a small electrical appliance with a head element, which carries out rotational movement and translational vibration movement. The head element is connected by a shaft for the rotational movement and a rocker for the translational movement. The movements are achieved by permanent magnets in the components driven by the electromagnetic coil of the motor and can be induced independently of one another. Neither the distances of components to each other nor the risk of collisions is discussed.

US 2011/214239 A1 relates to an actuator used in an electric toothbrush. The actuator comprises a fixed body containing an electromagnetic coil and a movable body containing a permanent magnet. An output shaft for the toothbrush is attached to the voke of the movable body, The magnet of the movable body is located inside the coil of the fixed body and the yoke of the movable body is located outside around the coil of the fixed body, separated by air gaps. An alternating current with the resonance frequency of the movable body is supplied to the coil, which forms an alternating magnetic field, driving the movable art in a resonant state. An elastic member, i.e. a coil spring, supports movable body on fixed body in a movable fashion and enables forward-backward motion as well as rotation along the output shaft.

Accordingly, it is an object of the present invention to provide a linear actuator structure and an oral cavity hygiene device that are capable of deterring contact of the stator and the movable element with a simple structure.

This object is solved with a linear actuator structure according to claim 1. Preferred embodiments are disclosed in the dependent claims.

One aspect of the present invention is a linear actuator structure including a housing and a linear actuator that is at least partially arranged in the housing. The linear actuator includes a stator, a movable element spaced apart by a first interval from the stator, and an output shaft coupled to the movable element by a connecting member. At least one of the output shaft and the connecting member is formed to be elastically deformable. The housing includes a buffer member allowed to contact the output shaft and spaced apart by a second interval from the output shaft. The second interval of the output shaft and the buffer member is greater than or equal to the first interval of the stator and the movable element.

Preferably, at least one of the output shaft and the connecting member is formed to be elastically deformable in a direction orthogonal to a reciprocating direction of the output shaft, and the buffer member is allowed to contact the output shaft when at least one of the output shaft and the connecting member is elastically deformed.

Preferably, at least one of the output shaft and the connecting member is formed to be elastically deformable in a rotating direction of which the axis is the reciprocating direction of the output shaft, and the buffer member is allowed to contact the output shaft when at least one of the output shaft and the connecting member is elastically deformed.

Preferably, the above structure further includes a plurality of plate springs that support two ends of the stator and two ends of the movable element so that the stator and the movable element face each other spaced apart by the first interval and the movable element reciprocates in a longitudinal direction of the output shaft. The output shaft is arranged at one end of the linear actuator. A relationship of $d2 \times L2 < d1 \times L1$ is satisfied when $d1$ is the interval of the stator and the movable element, $d2$ is the interval of the output shaft and the buffer member, $L1$ is the distance from an end of the buffer member proximal to a distal end of the output shaft to a buffer member side plate spring, among the plurality of plate springs, that is closest to the buffer member, and $L2$ is the distance from an end, opposite to the output shaft, of a portion where the stator and the movable element face each other to the buffer member side plate spring.

Preferably, the linear actuator structure further includes a contact sensor that detects contact of the output shaft and the buffer member.

Preferably, the contact sensor detects contact of the output shaft with the buffer member when detecting current flowing between the output shaft and the buffer member.

Preferably, the contact sensor includes a push switch arranged on the output shaft or the buffer member.

The present invention provides an oral cavity hygiene device including the linear actuator structure and a driven body used for oral hygiene connected to the output shaft.

Fig. 1 is a perspective view of a linear actuator.

Fig. 2 is an exploded perspective view of the linear actuator of Fig. 1.

Fig. 3 is a schematic view showing the interior of the linear actuator structure according to a first embodiment of the present invention.

Fig. 4 is a schematic view showing the interior of the linear actuator structure.

Fig. 5 is a cross-sectional view of the linear actuator structure taken along line A-A in Figs. 3 and 4.

Fig. 6 is a schematic view showing the interior of a linear actuator structure according to a second embodiment of the present invention.

Fig. 7 is a cross-sectional view of a linear actuator structure in a modification of the present invention.

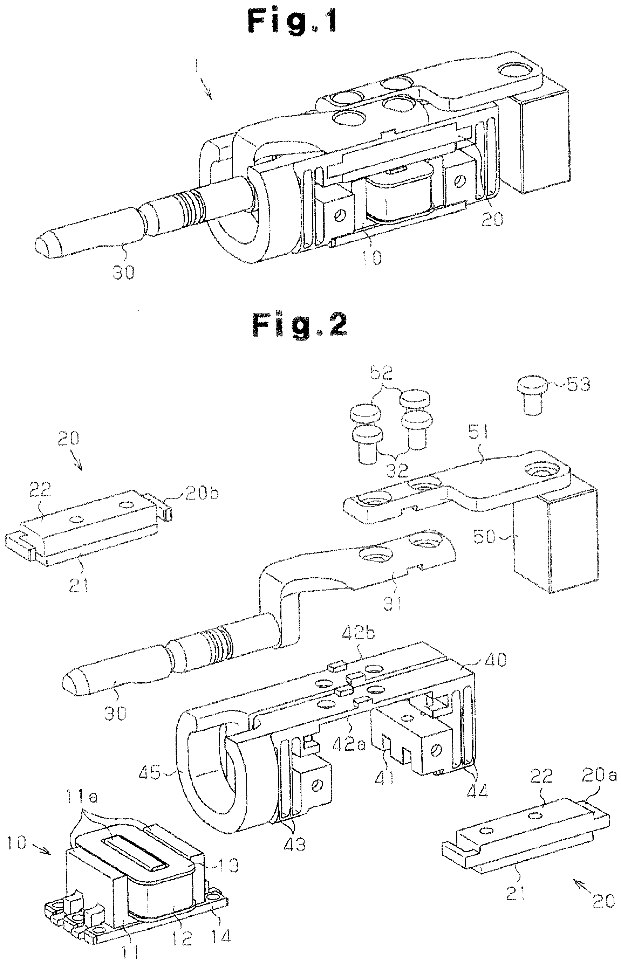

A first embodiment of the present invention will now be described with reference to Figs. 1 to 5.

As shown in Fig. 1, a linear actuator 1 includes a stator 10 and a movable element 20, which are arranged facing each other with a gap in between, and an output shaft 30, which reciprocates in an axial direction through cooperation of the stator 10 and the movable element 20.

In an example shown in Fig. 2, the stator 10 may be an electromagnet block including a core 11 and a winding 12. The core 11 is comb teeth shaped and includes three teeth 11a. The winding 12 is wound around the middle tooth by way of an insulator 13. The core 11 may be a sintered body of a magnetic material or a laminated body of steel plates. The core 11 and the winding 12 are insulated by the insulator 13. The stator 10 functions as an electromagnet when current is supplied to the winding 12. A fixing member 14 for fixing the linear actuator 1 to a housing 60, which will be described later, is attached to the stator 10.

The movable element 20 may be a magnetic block including a permanent magnet 21 and a back yoke 22, which is made from a magnetic material and adhered and fixed to the permanent magnet 21. The linear actuator 1 of the first embodiment includes two movable elements 20a and 20b.

The stator 10 and the movable elements 20a and 20b are held by a holding member 40 so that the stator 10 (electromagnet) and the permanent magnet 21 face each other spaced apart by a first interval d1. For example, the holding member 40 includes a stator accommodation portion 41, which accommodate the stator 10, and movable element accommodation portions 42a and 42b for accommodating the movable elements 20a and 20b. The stator 10 is accommodated in the stator accommodation portion 41 so that the tooth 11a of the core 11 faces the inner side, and the fixing member 14 faces the outer side. The movable elements 20a and 20b are respectively accommodated in the movable element accommodation portions 42a and 42b of the holding member 40 with the permanent magnet 21 facing the tooth 11a of the core 11 and the movable element 20a and the movable element 20b arranged next to each other. The holding member 40 includes plate springs 43 and 44. When the stator 10 and the movable element 20a are each elastically supported by the plate springs 43 and 44, the first interval d1 is formed and kept between the stator 10 and the movable element 20a. In the same manner, when the stator 10 and the movable element 20b are each elastically supported by the plate springs 43 and 44, the first interval d1 is formed and kept between the stator 10 and the movable element 20b. For example, each of the plate springs 43 and 44 may be formed by two sheets of plate springs.

A ring-shaped coupling unit 45 couples one end of the movable element accommodation portion 42a and one end of the movable element accommodation portion 42b. A material having small stretchability is suitable for the material of the holding member 40, and a material having elasticity is suitable for the material of the coupling unit 45. In the first embodiment, the holding member 40 and the coupling unit 45 are integrally formed by resin.

An output shaft connecting member 31 couples the movable element 20a to the output shaft 30. Bolts 32 fasten and fix one end of the output shaft connecting member 31 to the back yoke 22 of the movable element 20a with the holding member 40 located in between. The other end of the output shaft connecting member 31 is coupled to the output shaft 30. In the first embodiment, the output shaft 30 and the output shaft connecting member 31 are made from an electric conductive resin material. The output shaft 30 and the output shaft connecting member 31 are conductive and elastically deformable. The output shaft connecting member 31 is L-shaped, for example.

The movable element 20b is coupled to a weight 50 by a weight connecting member 51. Bolts 52 fasten and fix one end of the weight connecting member 51 to the back yoke 22 of the movable element 20b with the holding member 40 located in between. A bolt 53 fixes the other end of the weight connecting member 51 to the weight 50. The weight 50 may be cuboidal-shaped, for example.

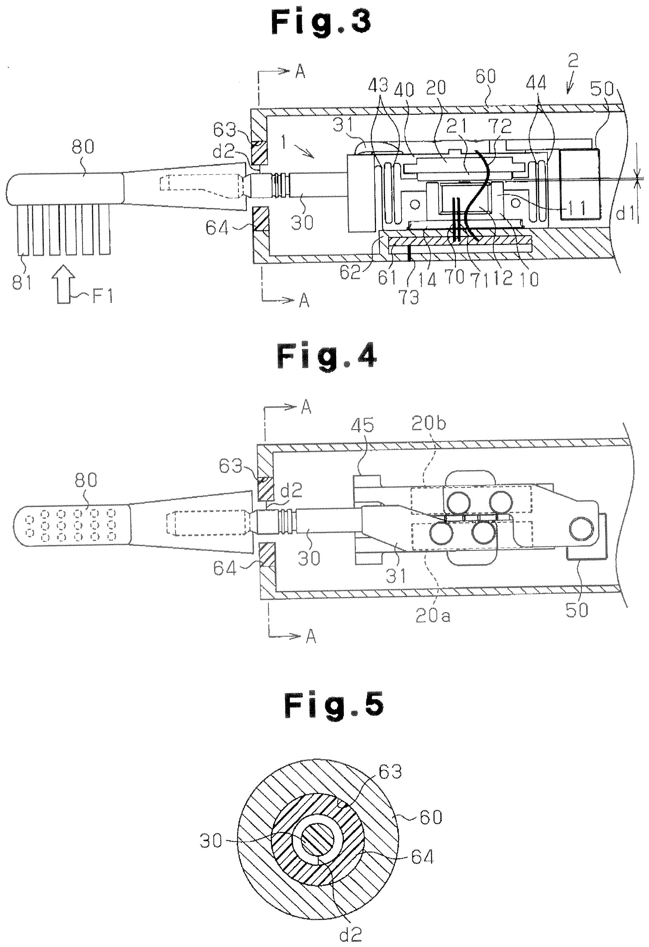

A linear actuator structure 2 including the linear actuator 1 and the housing 60 will now be described with reference to Figs. 3 to 5. In the illustrated example, the linear actuator structure 2 is arranged in an electrical toothbrush serving as an oral cavity hygiene device.

The housing 60 of the linear actuator structure 2 may be made from an electric conductive material such as metal, an electric conductive resin material, or the like. The linear actuator structure 2 includes the linear actuator 1, a control circuit 61 for controlling the drive of the linear actuator 1, and the like arranged inside the housing 60.

The housing 60 includes a mount 62 corresponding to the fixing member 14. When the fixing member 14, which is attached to the stator 10, is fixed to the mount 62 in the housing 60, the linear actuator 1 is coupled to the housing 60. Under this condition, a gap (d1) is formed between the stator 10 and the movable element 20, more specifically, between the core 11 and the permanent magnet 21 that face each other.

The winding 12 of the stator 10 is electrically connected to the control circuit 61 by conductive wires 70 and 71. In the first embodiment, the output shaft connecting member 31 and the control circuit 61 are electrically connected by a conductive wire 72. The control circuit 61 and the housing 60 are electrically connected by a conductive wire 73. Power is supplied from a power supply such as a battery and the like (not shown) to the control circuit 61.

The operation of the linear actuator 1 will now be described. The control circuit 61 cyclically reverses the direction of the current supplied to the winding 12 of the stator 10. In response to the reversing of the current, a magnetic attraction force and a magnetic repelling force acting between the permanent magnet 21 of the movable element 20 and the core 11 that becomes the magnetic pole of the electromagnet are cyclically reversed. This reciprocates the movable element 20. In this case, the direction of the reciprocating movement of the movable element 20 is restricted by the holding member 40. Thus, the movable element 20 reciprocates, using the elastic deformation of the holding member 40, along the opposing surface of the stator 10 and the movable element 20 and between the plate springs 43 and 44. The output shaft 30 is coupled to the movable element 20a so that the longitudinal direction of the output shaft 30 is the same as the reciprocation direction of the movable element 20. The weight 50 is coupled to the movable element 20b at the side opposite to the output shaft 30 in the longitudinal direction of the output shaft 30.

As shown in Fig. 4, in the first embodiment, the movable element 20a and the movable element 20b are arranged parallel to each other in a direction orthogonal to the reciprocating direction of the movable elements 20a and 20b and are reciprocated in phases opposite to each other. Since the movable element 20a and the movable element 20b are coupled by the coupling unit 45 that is elastic, the movable elements 20a and 20b resonate and perform a reciprocating movement.

The housing 60 includes a through hole 63, and the output shaft 30 projects out of the housing 60 from the through hole 63. The buffer member 64 is arranged in the through hole 63. The buffer member 64 is formed to be spaced apart from the output shaft 30 by a second interval d2. The buffer member 64 may be made from a material having electric conductivity such as electric conductive resin material and the like. As shown in Fig. 5, the buffer member 64 is ring-shaped and arranged along the wall of the circular through hole 63. In the illustrated example, the buffer member 64 is formed so that the interval d2 between the buffer member 64 and the output shaft 30, which has a circular cross-section, is constant in the circumferential direction of the output shaft 30. In the first embodiment, the first interval d1 and the second interval d2 are set to be equal.

The oral cavity hygiene device shown in Fig. 3 includes the linear actuator structure 2 and a driven body connected to a distal end of the output shaft 30. For example, the driven body is a brush body 80 for brushing teeth, and the oral cavity hygiene device is an electrical toothbrush. The distal end of the output shaft 30 projects out of the linear actuator structure 2. The brush body 80 for brushing teeth includes a brush 81 connected in a removable manner to the distal end of the output shaft 30. Preferably, the output shaft 30 is formed so that when the brush body 80 is connected to the output shaft 30, the brush 81 of the brush body 80 and the mount 62 of the housing 60 are located on the same side (lower side in the example of Fig. 3) of the electrical toothbrush.

The operation of the linear actuator structure 2 of the first embodiment will now be described.

In the first embodiment, the output shaft 30 and the output shaft connecting member 31 of the linear actuator 1 are formed to be elastically deformable. Therefore, for example, when external force is applied to the linear actuator structure 2 through the use of the electrical toothbrush and the like, the output shaft 30 is elastically deforms in a direction orthogonal to the reciprocating direction, which is the axial direction of the output shaft 30. Since the output shaft 30 and the buffer member 40 first come into contact even if the interval d1 of the stator 10 and the movable element 20 is equal to the interval d2 of the output shaft 30 and the buffer member 64, contact of the stator 10 and the movable element 20 may be deterred. Further, the load applied to the holding member 40 that supports the stator 10 and the movable element 20 may be reduced.

In this case, the output shaft 30 is elastically deformed particularly in the direction orthogonal to the reciprocating direction, and the buffer member 64 is arranged to contact the output shaft 30 in accordance with the elastic deformation of the output shaft 30 in the direction orthogonal to the reciprocating direction. When an electrical toothbrush includes the linear actuator structure 2, the pushing force indicated by arrow F1 in Fig. 3 often acts on the brush body 80 from the distal end toward the basal end of the brush 81 during use of the electrical toothbrush. In other words, it is assumed that an external force acts on the output shaft 30 in a direction orthogonal to the reciprocating direction. Therefore, by the arrangement of the output shaft 30 and the buffer member 64 as described above, when the linear actuator structure 2 is arranged in the electrical toothbrush, in particular, the contact of the stator 10 and the movable element 20 may be deterred in a suitable manner.

The linear actuator structure 2 may include a contact sensor for detecting the contact of the output shaft 30 and the buffer member 64. In the illustrated example, the output shaft 30, the output shaft connecting member 31, the housing 60 and the buffer member 64 are conductive. The output shaft connecting member 31 and the control circuit 61 are electrically connected, and the control circuit 61 and the housing 60 are electrically connected. In this case, when the output shaft 30 and the buffer member 64 come into contact, the output shaft 30, the output shaft connecting member 31, the control circuit 61, the housing 60, and the buffer member 64 form a closed electric circuit. Further, current flows between the output shaft 30 and the buffer member 64. In the first embodiment, the control circuit 61 functions as the contact sensor for detecting the contact of the output shaft 30 and the buffer member 64 through detection of current flowing between the output shaft 30 and the buffer member 64.

When the contact of the output shaft 30 and the buffer member 64 is detected during the driving of the linear actuator 1, for example, the driving of the linear actuator 1 is weakened or stopped by the control circuit 61. This allows the load of the holding member 40 to be reduced. Consequently, deformation and the like of the holding member 40, in particular, the plate springs 43 and 44 may be suppressed.

The first embodiment has the advantages described below.

(1) At least one of the output shaft 30 and the output shaft connecting member 31 of the linear actuator 1 is formed to be elastically deformable. The housing 60 includes the buffer member 64 spaced apart by the interval d2 from the output shaft 30 to allow for contact with the output shaft 30. The interval d2 of the output shaft 30 and the buffer member 64 is equal to the interval d1 of the stator 10 and the movable element 20. Thus, when force is externally applied to the linear actuator structure 2, the output shaft 30 and the buffer member 64 first come into contact. This deters contact of the stator 10 and the movable element 20 with a simple structure. For example, the contact of the stator 10 and the movable element 20 is deterred with a simple structure compared to the prior art in which the interval of the stator and the buffer member is smaller than the interval of the stator and the movable element.

(2) The output shaft 30 and the output shaft connecting member 31 are formed to be elastically deformable in a direction orthogonal to the reciprocating direction of the output shaft 30. When the output shaft 30 and the output shaft connecting member 31 are elastically deformed, the buffer member 64 may contact the output shaft 30. In this structure, when the electrical toothbrush includes the linear actuator structure 2, contact of the stator 10 and the movable element 20 is deterred.

(3) The linear actuator structure 2 includes the contact sensor that detects contact of the output shaft 30 and the buffer member 64. When contact of the output shaft 30 and the buffer member 64 is detected, the load applied to the holding member 40 is reduced through the control that weakens or stops the driving of the linear actuator 1, for example.

(4) The contact sensor detects contact of the output shaft 30 and the buffer member 64 when detecting current flowing between the output shaft 30 and the buffer member 64. In such a structure, contact of the output shaft 30 and the buffer member 64 is accurately detected.

(5) The electrical toothbrush includes the linear actuator structure 2 and the brush body 80, which is used for brushing teeth and connected to the output shaft 30 projecting from the housing 60. Contact of the stator 10 and the movable element 20 of the linear actuator 1, which is the drive source of the electrical toothbrush, is deterred with a simple structure. This facilitates the manufacturing of the electrical toothbrush.

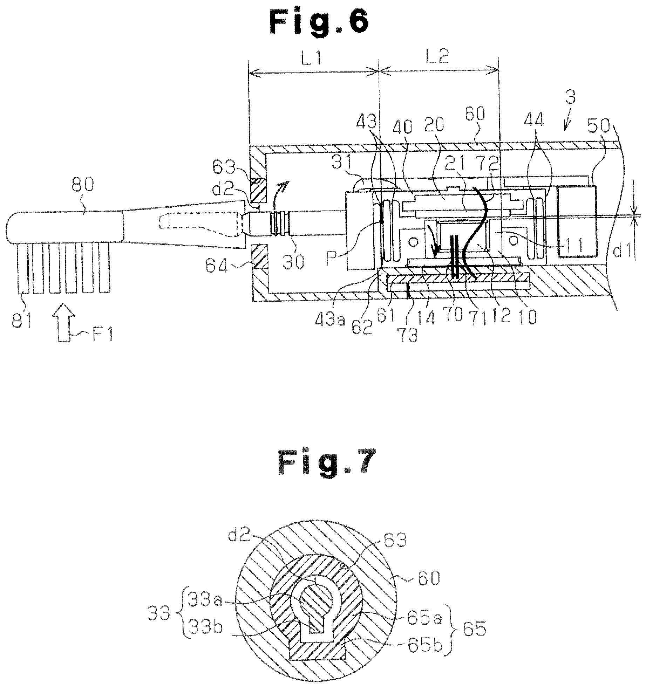

A second embodiment of the present invention will now be described with reference to Fig. 6. The same reference numerals are denoted on the elements substantially the same as the first embodiment, and redundant description will be omitted.

In a linear actuator structure 3 of the second embodiment, the interval d2 of the output shaft 30 and the buffer member 64 is also greater than or equal to the interval d1 of the stator 10 and the movable element 20.

Referring to Fig. 6, L1 is the distance from the end of the buffer member 64 that is closer to the distal end of the output shaft 30 (e.g., outer surface of the buffer member 64 in Fig. 6) to a buffer member side plate spring 43a that is closest to the buffer member 64 of the plate spring 43. Further, L2 is the distance from the end, at the opposite side of the output shaft 30, of the portion where the stator 10 (core 11) and the movable element 20 (permanent magnet 21) face each other to the buffer member side plate spring 43a.

In this case, in the second embodiment, the distance L1, the distance L2, the interval d1 of the stator 10 and the movable element 20, and the interval d2 of the output shaft 30 and the buffer member 64 are set to satisfy the following mathematical expressions (1) and (2).

$$d1 \leqq d2 \qquad (1)$$

$$d2 \times L2 < d1 \times L1 \quad (2)$$

Derivation of the mathematical expression (2) will now be described When the linear actuator structure 3 is arranged in an electrical toothbrush, in particular, it is assumed that the pushing force indicated by arrow F1 in Fig. 6 acts on the brush body 80. That is, external force acts on the output shaft 30 in a direction orthogonal to the reciprocating direction from the distal end toward the basal end of the brush 81, which is arranged on the output shaft 30. In this case, the output shaft 30 rotates about a point P on the buffer member side plate spring 43a. With regards to the stator 10 and the movable element 20, the movable element 20 also rotates about the point P on the buffer member side plate spring 43a toward the fixed stator 10.

In this case, when θ1 [rad] is the rotation angle of the output shaft 30 until contacting the buffer member 64, the angle θ1 is a small angle and thus may be approximated like in the following mathematical expression (3) using the distance L1 and the interval d2.

$$\theta 1 \fallingdotseq d2/L1 \qquad (3)$$

In the same manner, when θ2 [rad] is the rotation angle until the movable element 20 contacts the stator 10, the angle θ2 is also a small angle and thus may be like in the following mathematical expression (4) using the distance L2 and the interval d1.

$$\theta 2 \fallingdotseq d1/L2 \qquad (4)$$

To have the output shaft 30 and the buffer member 64 to contact each other before the stator 10 and the movable element 20 come into contact, the relationship of the following mathematical expression (5) should be satisfied.

$$\theta 1 < \theta 2 \qquad (5)$$

Thus, the mathematical expression (2) is obtained by substituting mathematical expression (3) and mathematical expression (4) for mathematical expression (5).

In the linear actuator structure 3 of the second embodiment, even when the linear actuator structure 3 is arranged in the electrical toothbrush, in particular, and external force acts on the output shaft 30 in a direction orthogonal to the reciprocating direction, contact of the stator 10 and the movable element 20 may be deterred in a suitable manner.

In the second embodiment, the stator 10 and the movable element 20 are spaced apart by the constant interval d1 between the core 11 and the permanent magnet 21, which face each other. Further, the output shaft 30 and the buffer member 64 are spaced apart by the constant interval d2 in a circumferential direction. However, in strict terms, with regards to the interval d1, the interval d1 of the end of the output shaft 30 in the portion where the core 11 and the permanent magnet 21 face each other and the opposite end of the output shaft 30 only needs to satisfy the above relationship. Also, with regards to the interval d2, the interval d2 of the surface of the output shaft 30 opposite to the brush 81 and the buffer member 64 only needs to satisfy the above relationship.

The linear actuator structure 3 of the second embodiment includes the contact sensor that detects contact of the output shaft 30 and the buffer member 64 with a structure similar to that of the first embodiment.

As described above, the second embodiment has the following advantage in addition to advantages (2) to (5) of the first embodiment.

(6) The linear actuator structural 3 is formed so that mathematical expressions (1) and (2) are both satisfied. Thus, even when external force is applied to the linear actuator structure 3, the output shaft 30 and the buffer member 64 first come into contact. This deters contact of the stator 10 and the movable element 20. In other words, contact of the stator 10 and the movable element 20 is deterred with a simple structure compared to the prior art in which the interval of the stator and the buffer member needs to be smaller than the interval of the stator and the movable element. Even when the linear actuator structure 3 is arranged in the electrical toothbrush and external force acts on the output shaft 30 in a direction orthogonal to the reciprocating direction, contact of the stator 10 and the movable element 20 is deterred in a suitable manner.

The embodiments may be modified as below.

In each embodiment, when the contact sensor, which detects contact of the output shaft 30 and the buffer member 64, detects current flowing between the output shaft 30 and the buffer member 64, contact of the output shaft 30 and the buffer member 64 is detected. In another example, the contact sensor may include a push switch arranged, for example, on the output shaft 30 at a position where contact occurs with the buffer member 64 or on the buffer member 64. In this case, the push switch is pushed when the output shaft 30 contacts the buffer member 64, and the control circuit 61 detects the pushing of the push switch thus weakening or stopping the drive of the linear actuator. This also enables detection of the contact of the output shaft 30 and the buffer member 64.

In addition to the direction orthogonal to the reciprocating direction of the output shaft, the output shaft and the output shaft connecting member described above may also be elastically deformable in a rotating direction of which the axis is the reciprocating direction. The buffer member may be arranged to be able to contact the output shaft in accordance with the elastic deformation of the output shaft in the direction orthogonal to the reciprocating direction and the rotating direction of which the axis is the reciprocating direction. For example, the output shaft and the buffer member may have a cross-sectional shape in the radial direction of the output shaft as shown in Fig. 7. In other words, in Fig. 7, an output shaft 33 is formed so that the cross-sectional shape in the radial direction includes a circular portion 33a and a tetragonal portion 33b extending from the circular portion 33a. The buffer member 65 includes a circular portion 65a and a tetragonal portion 65b formed in conformance with the contour of the output shaft 33. The interval (d2) including an annular portion and a bent portion is formed between the buffer member 65 and the output shaft 33. In such a structure, the output shaft 33 and the buffer member 65 first come into contact with each other not only when external force is applied in the direction orthogonal to the axial direction of the output shaft 33 but also when the external force is applied in the circumferential direction (rotating direction) of the output shaft 33. This deters contact of the stator 10 and the movable element 20. The output shaft and the output shaft connecting member may be formed to be elastically deformable only in the rotating direction of which the axis is the reciprocating direction of the output shaft, and the buffer member may be arranged to be able to contact the output shaft in accordance with the elastic deformation of the output shaft in the rotating direction of which the axis is the reciprocating direction.

In each embodiment, the output shaft 30 and the output shaft connecting member 31 are both formed to be elastically deformable. Instead, only one of the output shaft 30 and the output shaft connecting member 31 may be formed to be elastically deformable. In other words, as long as at least one of the output shaft 30 and the output shaft connecting member 31 that supports the output shaft 30 is elastically deformable, the output shaft 30 and the buffer member 64 may first come into contact with each other when the external force is received.

The buffer member 64 does not need to be arranged in the through hole 63 of the housing 60. The buffer member 64 may be arranged to be able to contact the output shaft 30 at the periphery of the output shaft 30 in the interior of the housing 60, for example. In this case, the housing 60 may be formed to a hollow shape or a bottomed tubular shape not including the through hole 63. The output of the linear actuator 1 may be taken out from the opening other than the through hole 63.

In each embodiment, the linear actuator is used as a drive source of the electrical toothbrush. The linear actuator may be used as the drive source of other oral cavity hygiene devices and other equipment such as stain removing device, an interdental brush, a tongue cleaner device, and the like. When using the linear actuator as the drive source of such an oral cavity hygiene device, a stain removing attachment, an interdental cleaning brush, a brush for tongue cleaning, and the like is connected to the output shaft in lieu of the brush body used for brushing teeth as the driven body for oral hygiene.

The permanent magnet may be arranged in the stator 10, and the electromagnet may be arranged in the movable element 20.

The embodiments may be combined, and the modifications may be combined.

## Claims

1. A linear actuator structure (2) including a housing (60) and a linear actuator (1) that is at least partially arranged in the housing (60), the linear actuator (1) including:

   a stator (10),
   a movable element (20) spaced apart by a first interval (d1) from the stator, and
   an output shaft (30)
   **characterized in that**
   the output shaft (30) is coupled to the movable element (20) by a connecting member (31) and spaced apart by a second interval (d2) from a buffer member (64) included in the housing (60), at least one of the output shaft (30) and the connecting member (31) is formed to be elastically deformable so that when force is externally applied the output shaft (30) and the buffer member (64) first come into contact before the stator (10) and the movable element (20) come into contact;
   and
   the second interval (d2) of the output shaft (30) and the buffer member (64) is greater than or equal to the first interval (d1) of the stator (10) and the movable element (20).

2. The linear actuator structure (2) according to claim 1, **characterized in that** at least one of the output shaft (30) and the connecting member (31) is formed to be elastically deformable in a direction orthogonal to a reciprocating direction of the output shaft (30), and the buffer member (64) is allowed to contact the output shaft (30) when at least one of the output shaft (30) and the connecting member (31) is elastically deformed.

3. The linear actuator structure (2) according to claim 1 or 2, wherein at least one of the output shaft (30) and the connecting member (31) is formed to be elastically deformable in a rotating direction of which the axis is the reciprocating direction of the output shaft (30), and the buffer member (64) is allowed to contact the output shaft (30) when at least one of the output shaft (30) and the connecting member (31) is elastically deformed.

4. The linear actuator structure (2) according to claim 1 or 2, further including a plurality of plate springs (43, 44) that support two ends of the stator (10) and two ends of the movable element (20) so that the stator (10) and the movable element (20) face each other spaced apart by the first interval (d1) and the movable element (20) reciprocates in a longitudinal direction of the output shaft (30), the linear actuator structure (2) being **characterized in that**:

the output shaft (30) is arranged at one end of the linear actuator (1); and
a relationship of d2×L2<d1×L1 is satisfied when
d1 is the first interval of the stator (10) and the movable element (20),
d2 is the second interval of the output shaft (30) and the buffer member (64),
L1 is the distance from an end of the buffer member (64) proximal to a distal end of the output shaft (30) to a buffer member side plate spring (43), among the plurality of plate springs (43, 44), that is closest to the buffer member (64), and
L2 is the distance from an end, opposite to the output shaft (30), of a portion where the stator (10) and the movable element (20) face each other to the buffer member side plate spring (43).

5. The linear actuator structure according to any one of claims 1 to 4, further including a contact sensor that detects contact of the output shaft (30) and the buffer member (64).

6. The linear actuator structure according to claim 5, wherein the contact sensor detects contact of the output shaft (30) with the buffer member (64) when detecting current flowing between the output shaft (30) and the buffer member (64).

7. The linear actuator structure according to claim 5, wherein the contact sensor includes a push switch arranged on the output shaft (30) or the buffer member (64).

8. An oral cavity hygiene device being **characterized by**:

the linear actuator structure according to any one of claims 1 to 7; and
a driven body (80) used for oral hygiene connected to the output shaft (30).

**Patentansprüche**

1. Linearantriebs-Struktur (2), die ein Gehäuse (60) und einen Linearantrieb (1) einschließt, der wenigstens teilweise in dem Gehäuse (60) angeordnet ist, wobei der Linearantrieb (1) enthält:

einen Stator (10),
ein bewegliches Element (20), das um einen ersten Zwischenraum (d1) von dem Stator beabstandet ist, und

eine Abtriebswelle (30)
**dadurch gekennzeichnet, dass**
die Abtriebswelle (30) über ein Verbindungselement (31) mit dem beweglichen Element (20) gekoppelt ist und um einen zweiten Zwischenraum (d2) von einem in dem Gehäuse (60) enthaltenen Pufferelement (64) beabstandet ist,
die Abtriebswelle (30) oder/und das Verbindungselement (31) so ausgebildet ist/sind, dass sie/es elastisch so verformt werden kann/können, dass, wenn Kraft von außen ausgeübt wird, die Abtriebswelle (30) und das Pufferelement (64) zuerst in Kontakt kommen, bevor der Stator (10) und das bewegliche Element (20) in Kontakt kommen;
und
der zweite Zwischenraum (d2) zwischen der Abtriebswelle (30) und dem Pufferelement (64) größer ist als oder genauso groß wie der erste Zwischenraum (d1) zwischen dem Stator (10) und dem beweglichen Element (20).

2. Linearantriebs-Struktur (2) nach Anspruch 1, **dadurch gekennzeichnet, dass** die Abtriebswelle (30) oder/und das Verbindungselement (31) so ausgebildet ist/sind, dass sie/es in einer Richtung im rechten Winkel zu einer Richtung von Hin- und Herbewegung der Abtriebswelle (30) elastisch verformt werden kann/können, und das Pufferelement (64) mit der Abtriebswelle (30) in Kontakt kommen kann, wenn die Abtriebswelle (30) oder/und das Verbindungselement (31) elastisch verformt wird/werden.

3. Linearantriebs-Struktur (2) nach Anspruch 1 oder 2, wobei die Abtriebswelle (30) oder/und das Verbindungselement (31) so ausgebildet ist/sind, dass sie/es in einer Drehrichtung elastisch verformt werden kann/können/, deren Achse die Richtung von Hin- und Herbewegung der Abtriebswelle (30) ist, und das Pufferelement (64) mit der Abtriebswelle (30) in Kontakt kommen kann, wenn die Abtriebswelle (30) oder/und das Verbindungselement (31) elastisch verformt wird/werden.

4. Linearantriebs-Struktur (2) nach Anspruch 1 oder 2, die des Weiteren eine Vielzahl von Blattfedern (43, 44) umfasst, die zwei Enden des Stators (10) und zwei Enden des beweglichen Elementes (20) so lagern, dass der Stator (10) und das bewegliche Element (20) einander um den ersten Zwischenraum (d1) beabstandet gegenüberliegen, und sich das bewegliche Element (20) in einer Längsrichtung der Abtriebswelle (30) hin- und herbewegt, wobei die Linearantriebs-Struktur (2) **dadurch gekennzeichnet ist, dass**
die Abtriebswelle (30) an einem Ende des Linearantriebs (1) angeordnet ist; und
eine Beziehung von d2×L2<d1×L1 gilt, wenn

d1 der erste Zwischenraum zwischen dem Stator (10) und dem beweglichen Element (20) ist,

d2 der zweite Zwischenraum zwischen der Abtriebswelle (30) und dem Pufferelement (64) ist,

L1 der Abstand von einem Ende des Pufferelementes (64) nahe an einem vorderen Ende der Abtriebswelle (30) zu einer Blattfeder (43) an der Seite des Pufferelementes der Vielzahl von Blattfedern (43, 44) ist, die dem Pufferelement (64) am nächsten liegt, und

L2 der Abstand von einem der Abtriebswelle (30) gegenüberliegenden Ende eines Abschnitts, an dem der Stator (10) und das bewegliche Element (20) einander zugewandt sind, zu der Blattfeder (43) an der Seite des Pufferelementes ist.

**5.** Linearantriebs-Struktur nach einem der Ansprüche 1 bis 4, die des Weiteren einen Kontakt-Sensor enthält, der Kontakt der Abtriebswelle (30) und des Pufferelementes (64) erfasst.

**6.** Linearantriebs-Struktur nach Anspruch 5, wobei der Kontaktsensor Kontakt der Abtriebswelle (30) mit dem Pufferelement (64) erfasst, wenn Stromfluss zwischen der Abtriebswelle (30) und dem Pufferelement (64) erfasst wird.

**7.** Linearantriebs-Struktur nach Anspruch 5, wobei der Kontakt-Sensor einen Druckschalter enthält, der an der Abtriebswelle (30) oder dem Pufferelement (64) angeordnet ist.

**8.** Mundhöhlen-Hygienevorrichtung, die **gekennzeichnet ist durch**:

>   die Linearantriebs-Struktur nach einem der Ansprüche 1 bis 7; sowie
>   einen angetriebenen Körper (80), der für Mundhygiene verwendet wird und mit der Abtriebswelle (30) verbunden ist.

**Revendications**

**1.** Structure d'actionneur linéaire (2) comportant un boîtier (60) et un actionneur linéaire (1) agencé au moins partiellement dans le boîtier (60), l'actionneur linéaire (1) comprenant :

>   un stator (10),
>   un élément mobile (20) espacé selon un premier intervalle (d1) du stator, et
>   un axe de sortie (30),
>   **caractérisée en ce que**
>   l'axe de sortie (30) est couplé à l'élément mobile (20) par un élément de connexion (31) et espacé selon un deuxième intervalle (d2) d'un élément tampon (64) inclus dans le boîtier (60),

au moins un élément parmi l'axe de sortie (30) et l'élément de connexion (31) est formé pour être élastiquement déformable de telle sorte que quand une force est appliquée de façon externe, l'axe de sortie (30) et l'élément tampon (64) entrent en contact avant que le stator (10) et l'élément mobile (20) n'entrent en contact ; et

le deuxième intervalle (d2) entre l'axe de sortie (30) et l'élément tampon (64) est supérieur ou égal au premier intervalle (d1) entre le stator (10) et l'élément mobile (20) .

**2.** Structure d'actionneur linéaire (2) selon la revendication 1, **caractérisée en ce qu'**au moins un élément parmi l'axe de sortie (30) et l'élément de connexion (31) est formé pour être élastiquement déformable dans une direction orthogonale à la direction de va-et-vient de l'axe de sortie (30), et l'élément tampon (64) peut entrer en contact avec l'axe de sortie (30) quand au moins un élément parmi l'axe de sortie (30) et l'élément de connexion (31) est déformé élastiquement.

**3.** Structure d'actionneur linéaire (2) selon la revendication 1 ou 2, dans laquelle au moins un élément parmi l'axe de sortie (30) et l'élément de connexion (31) est formé pour être élastiquement déformable dans une direction de rotation dont l'axe est la direction de va-et-vient de l'axe de sortie (30), et l'élément tampon (64) peut entrer en contact avec l'axe de sortie (30) quand au moins un élément parmi l'axe de sortie (30) et l'élément de connexion (31) est déformé élastiquement.

**4.** Structure d'actionneur linéaire (2) selon la revendication 1 ou 2, comprenant en outre une pluralité de ressorts à lame (43, 44) qui supportent deux extrémités du stator (10) et deux extrémités de l'élément mobile (20), de telle sorte que le stator (10) et l'élément mobile (20) se font face en étant espacés selon le premier intervalle (d1) et l'élément mobile (20) va et vient en direction longitudinale de l'axe de sortie (30), la structure d'actionneur linéaire (2) étant **caractérisée en ce que** :

>   l'axe de sortie (30) est agencé à une extrémité de l'actionneur linéaire (1) ; et
>   une relation d2×L2 < d1×L1 est satisfaite quand
>   d1 est le premier intervalle entre le stator (10) et l'élément mobile (20),
>   d2 est le deuxième intervalle entre l'axe de sortie (30) et l'élément tampon (64),
>   L1 est la distance depuis une extrémité de l'élément tampon (64) proche d'une extrémité distale de l'axe de sortie (30) jusqu'à un ressort à lame (43) côté élément tampon, parmi la pluralité de ressorts à lame (43, 44), qui est le plus proche de l'élément tampon (64), et L2 est la distance entre une extrémité opposée à l'axe de sortie (30) d'une portion où le stator (10) et l'élément mobile (20) se font face jusqu'au ressort à lame (43) côté élément tampon.

5. Structure d'actionneur linéaire selon l'une quelconque des revendications 1 à 4, comprenant en outre un capteur de contact qui détecte un contact entre l'axe de sortie (30) et l'élément tampon (64).

6. Structure d'actionneur linéaire selon la revendication 5, dans laquelle le capteur de contact détecte un contact entre l'axe de sortie (30) et l'élément tampon (64) lors de la détection d'un écoulement de courant entre l'axe de sortie (30) et l'élément tampon (64).

7. Structure d'actionneur linéaire selon la revendication 5, dans laquelle le capteur de contact comprend un bouton-poussoir agencé sur l'axe de sortie (30) ou l'élément tampon (64).

8. Dispositif d'hygiène de la cavité buccale, **caractérisé par** :

la structure d'actionneur linéaire selon l'une quelconque des revendications 1 à 7 ; et un corps entraîné (80) utilisé pour l'hygiène orale et connecté à l'axe de sortie (30).

# Fig.1

# Fig.2

EP 2 790 310 B1

# Fig.3

# Fig.4

# Fig.5

12

# Fig.6

# Fig.7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010104126 A
- WO 2010143166 A2
- US 2011214239 A1